Europäisches Patentamt

European Patent Office

Office européen des brevets

(11) Publication number: **0 310 177 B1**

# EUROPEAN PATENT SPECIFICATION

(45) Date of publication of patent specification: **18.03.92**   (51) Int. Cl.<sup>5</sup>: **F16L  21/00**

(21) Application number: **88202055.5**

(22) Date of filing: **21.09.88**

(54) **A detachable connection.**

(30) Priority: **28.09.87 SE 8703723**

(43) Date of publication of application:
**05.04.89 Bulletin  89/14**

(45) Publication of the grant of the patent:
**18.03.92 Bulletin  92/12**

(84) Designated Contracting States:
**DE FR GB**

(56) References cited:
EP-A- 0 236 217       DE-B- 2 234 387
DE-U- 1 952 636       US-A- 2 474 431
US-A- 3 376 055       US-A- 4 426 106

(73) Proprietor: **JÄDERBERG, Carl-Eric**
**Larmgatan 8**
**S-393 23 Kalmar(SE)**

(72) Inventor: **JÄDERBERG, Carl-Eric**
**Larmgatan 8**
**S-393 23 Kalmar(SE)**

(74) Representative: **Rostovanyi, Peter et al**
**AWAPATENT AB Box 5117**
**S-200 71 Malmö(SE)**

## Description

## TECHNICAL FIELD

The present invention relates to a detachable connection between two duct sections in an air distribution duct for an air distribution system.

## BACKGROUND PRIOR ART

In such ducts, especially in exhaust air ducts, there is a demand for a possibility of cleaning the duct from dust, grease and other cloggings of the duct passage. Some ducts have even a cleaning requirement according to fire law statutes. In order to perform a satisfactory cleaning of the duct it has been a wish to detach the various duct sections one by one, such that one can better get an opportunity of performing the cleaning. This has not been possible in connection with standard air ducts, since the various duct sections are permanently assembled in the air duct and not intended to be detachable. Therefore, one has been forced to provide cleaning doors in each elbow of the duct and at approximately each fifth meter of straight duct portions. However, it has turned out to be very difficult to readily clean the ducts via these cleaning doors.

US-A-2,474,431 relates to a clamp for sealingly connecting the adjacent ends of tubes and pipes. The clamp comprises a sleeve which receives the tube ends and a pair of clamping members which operate over and clampingly engage the sleeve.

US-A-4,426,106 discloses joint sleeves which are sealingly connectable to duct sections.

## SUMMARY OF THE INVENTION

The object of the present invention is, therefore, to provide a detachable connection of the aforedescribed kind, which enables the various duct sections to be easily and quickly detached one by one from the the air duct.

This object is achieved with a connection constructed in accordance with the invention and having the characterizing features set forth in Claim 1.

Further developments of the invention are defined in the depending claims.

By providing a detachable connection, in accordance with the invention, at each joint between two duct sections, each duct section can be separately removed from the air duct simply by opening the band ring at both ends of the duct section.

## BRIEF DESCRIPTION OF THE DRAWINGS

The invention will be described in more detail with reference to the accompanying drawings, which illustrate a preferred embodiment of the invention.

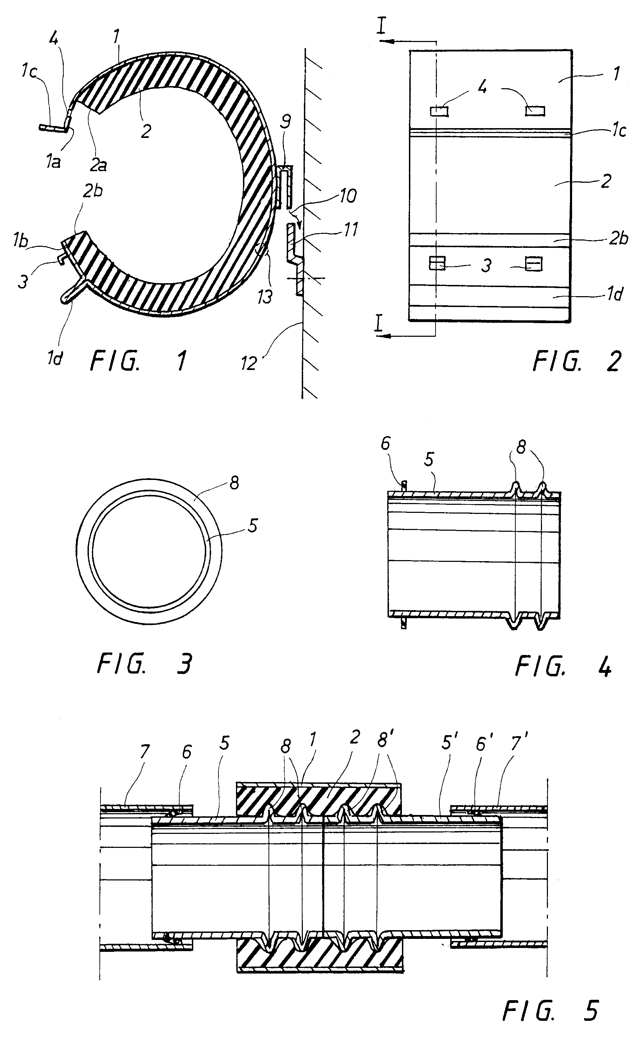

Fig. 1 illustrates a cross-section of a band ring incorporated in the connection according to the invention, the band ring being shown in an open mode, the cross-section being taken along the line I-I of Fig. 2. Fig. 2 is a side elevation view of the band ring being shown in Fig. 1. Fig. 3 is an end view of a joint sleeve incorporated in the connection according to the invention. Fig. 4 is a central longitudinal cross-section of the joint sleeve shown in Fig. 3. Fig. 5 is a central longitudinal cross-section of a connection according to the invention mounted between two duct sections of an air distribution duct.

## A PREFERRED EMBODIMENT

Fig. 1 illustrates a sealing element in the shape of a ring shaped wrap-around element or a split ring element 1 of an elastically deformable metallic material having a thickness of approximately 0.6-1.5 mm. The inner side of the band ring 1 is covered, for instance by gluing, along its entire length with an air sealing layer 2, for instance of rubber or plastic . The thickness of the layer 2 is approximately 2 - 10, preferably approximately 3 - 7 mm. The layer 2 ends with an end surface 2a at a predetermined distance from one end 1a of the band ring, whereas it with its opposite end surface 2b extends to the edge of the second end 1b of the band ring. Thereby, the band end 1b may be inserted beneath the band end 1a, as is explained in more detail below.

The ends of the band ring 1 can be brought together from the position shown in Fig. 1 to a position where the end surfaces 2a and 2b of the layer 2 abut each other. In this position two L-shaped hooks 3, which are fastened to the band end 1b close to the edge thereof, are able to snap into a respective hole 4 being provided in the band end 1a close to the edge thereof. The hooks 3 and holes 4 thereby form locking means which hold the band ring in a closed position.

In order to facilitate the pressing together of the band ends 1a and 1b, the outermost portion 1c of the band end 1a is bent outwards approximately 90°, and the band end 1b is provided, spaced from its edge, with a radial flange 1d extending along the entire width of the band ring 1, the flange being formed for instance by bending and double folding a portion of the band ring. A suitable tool, for instance a poly-grip tool, can, thereby, grip the projection formed by the bent end 1c and the flange 1d in order to press the band ends 1a and 1b together.

The bent end 1c also forms a guiding surface for guiding the band end 1b beneath the band end 1a.

Alternative locking means may be used, for instance ex-center locking means of the type where a tightening loop that is provided at one band end can grip a hook provided at the other band end, and thereafter with a tightening force press the band ends towards each other.

In the closed position of the band ring 1 the layer 2 has an inner diameter which substantially corresponds to the external diameter of the mutually like joint sleeves 5 and 5', one of which is shown in Fig. 3 - 4, which sleeves are to be wrapped around by the band ring.

The joint sleeves 5 and 5', which in the embodiment shown are in the form of joint insertion tubes, can - by means of a ring shaped sealing flange 6 of rubber or the like which is fastened to the insertion tube - sealingly be inserted into a respective one of two duct sections 7 and 7' of an air distribution duct, as is shown in Fig. 5.

The insertion tubes 5 and 5' are manufactured of metallic material and has a thickness of approximately 0.6-1.5 mm. The insertion tubes 5 and 5' are, close to those ends thereof which face each other and which preferably are spaced from the edge of the insertion tube, provided with two radially projecting flanges 8 and 8', respectively, with a radial height which is less than the thickness of the layer 2. Suitably, the flanges have a thickness of approximately 1 - 3 mm. The flanges may for instance be manufactured by bending and double folding a respective portion of the insertion tube.

Secured to the back of the band ring is a downwardly open sleeve 9 which can be hooked, see the arrow 10, over a corresponding suspension flange 11 on a wall 12. In this way the band ring 1 can be suspended on the wall 12 and, thereby, support the present air duct.

In the embodiment shown, the band ring 1 can be opened and closed since it is made of an elastic material. Alternatively, the band ring may be opened and closed by means of a hinge, as is schematically shown at 13 in Fig. 1.

When interconnecting two duct sections 7 and 7', see Fig. 5, the two insertion tubes 5 and 5' are first inserted with their sealing ends into each one of the duct sections, the other ends of the insertion tubes being brougt into abutment with each other. Then the band ring is opened to such an extent that it can be hooked over the joint between the insertion tubes. The two ends 1a and 1b of the band ring are then brought together such that the layer 2 is pressed against the insertion tubes. The flanges 8 and 8' of the insertion tubes will, thereby, be forced into the layer 2, as is shown in Fig. 5, to establish a very efficient sealing.

The layer 2 should have such a width, preferably approximatively 6 - 10 mm, that it with safe margin extends past all the flanges 8 and 8', respectively.

Although best sealing efficiency is achieved by at least two flanges 8 and 8', respectively, on each insertion tube, it is conceivable to provide the insertion tubes with only one such flange.

## Claims

1. A detachable connection between two duct sections (7, 7') in an air distribution duct of an air distribution system, said connection comprising two joint sleeves (5, 5'), which each one has at one end at least one radial flange (8, 8') and which are detachably connectable to each other by means of a sealing element in the form of a split band ring (1) and an air sealing layer (2), the thickness of which in a radial direction exceeds the extension of the flange (8, 8') in the radial direction, the ends of the band ring being capable of being moved in a direction from each other in order to enable the band ring to straddle the said one ends of two joint sleeves, and capable of being moved in a direction towards each other such that the flanges will be forced into the air sealing layer, and the ends of the band ring having locking means (3, 4 ) in order to retain the ends of the band ring in a clamped position, **characterised** in that the air sealing layer (2) is a split ring attached on the inside of the split band ring by gluing, that the band ring has a substantially even circumferential wall; that the two joint sleeves (5, 5') at the other end (6, 6') are sealingly connectable to a respective one of said duct sections (7, 7'), and that the band ring (1) has means (9) for suspending the band ring on a wall (12) and thus support the air duct on the wall.

2. A detachable connection according to Claim 1, **characterized** in that the band ring is manufactured of an elastically deformable material in order to enable said movement of the ends of the band ring.

3. A detachable connection according to Claim 1, **characterized** in that the band ring has a hinge (13) in order to enable said movement of the ends of the band ring.

4. A detachable connection in accordance with any one of the preceeding Claims, **characterized** in that the air sealing layer (2) terminates at a predetermined distance from one end (1a) of the band ring such that the other end (1b) of the band ring can be inserted said pre-determined distance beneath said one end such that the two ends of the band ring overlap each other.

5. A detachable connection according to Claim 4, **characterized** in that said locking means are arranged in an area of the ends of the band ring where these overlap each other, the locking means consisting of hooks (3) on said other end (1b), which are insertable into corresponding holes (4) in said one end of the band ring.

6. A detachable connection according to any one of the Claims 4 - 5, **characterized** in that said one end (1a) of the band ring has a guiding surface (1c) for guiding said other end (1b) beneath said one end.

7. A detachable connection according to any one of the preceeding Claims, **characterized** in that the joint sleeves consist of joint insertion tubes (5, 5') which at one end (6, 6') are sealingly insertable into each one of said duct sections.

8. A detachable connection according to any one of the preceeding Claims, **characterized** in that each one of the ends of the band ring has an external projection (1c, 1d) such that said movement of the band ring can be achieved by gripping said projections.

**Revendications**

1. Raccord amovible formé entre deux tronçons (7, 7') d'un conduit de distribution d'air d'un circuit de distribution d'air, le raccord comprenant deux manchons de jonction (5, 5'), chacun d'eux ayant, à une première extrémité, au moins une joue radiale (8, 8'), les manchons pouvant être raccordés de façon amovible l'un à l'autre à l'aide d'un élément d'étanchéité sous forme d'un anneau fendu (1) formé d'une bande et d'une couche (2) d'étanchéité à l'air dont l'épaisseur, en direction radiale, est supérieure à la longueur de la joue (8, 8') en direction radiale, les extrémités de l'anneau formé par la bande pouvant être écartées l'une de l'autre afin qu'elles permettent à l'anneau de chevaucher les premières extrémités des deux manchons de jonction, et pouvant se rapprocher l'une de l'autre afin que les joues soient repoussées dans la couche d'étanchéité à l'air, et les extrémités de l'anneau comportent un dispositif de blocage (3, 4) assurant la retenue des extrémités de l'anneau en position serrée, caractérisé en ce que la couche d'étanchéité à l'air (2) est un anneau fendu fixé à l'intérieur de l'anneau fendu formé par la bande, par collage, en ce que l'anneau formé par la bande a une paroi circonférentielle sensiblement uniforme, en ce que les deux manchons de jonction (5, 5') peuvent être raccordés de manière étanche, à l'autre extrémité (6, 6'), à un tronçon respectif (7, 7') de conduit, et en ce que l'anneau (1) formé par la bande comporte un dispositif (9) destiné à suspendre l'anneau à un mur (12) et ainsi à supporter le conduit de circulation d'air sur le mur.

2. Raccord amovible selon la revendication 1, caractérisé en ce que l'anneau formé par la bande est constitué d'un matériau élastiquement déformable permettant le déplacement des extrémités de l'anneau.

3. Raccord amovible selon la revendication 1, caractérisé en ce que l'anneau formé par une bande a une articulation (13) permettant le déplacement des extrémités de l'anneau.

4. Raccord amovible selon l'une quelconque des revendications précédentes, caractérisé en ce que la couche (2) d'étanchéité à l'air se termine à une distance prédéterminée d'une première extrémité (1a) de l'anneau sous forme d'une bande de manière que l'autre extrémité (1b) de l'anneau en forme de bande puisse être introduite de la distance prédéterminée sous ladite première extrémité si bien que les deux extrémités de l'anneau en forme de bande peuvent se recouvrir.

5. Raccord amovible selon la revendication 4, caractérisé en ce que le dispositif de blocage est placé dans la région des extrémités de l'anneau à l'endroit où les extrémités se recouvrent, le dispositif de blocage comprenant des crochets (3) placés à l'autre extrémité (1b) et qui sont destinés à pénétrer dans des trous correspondants (4) formés dans la première extrémité de l'anneau.

6. Raccord amovible selon l'une des revendications 4 et 5, caractérisé en ce que la première extrémité (1a) de l'anneau formé par une bande a une surface (1c) de guidage de l'autre extrémité (1b) sous la première extrémité.

7. Raccord amovible selon l'une quelconque des revendications précédentes, caractérisé en ce que les manchons de jonction comprennent des tubes de jonction (5, 5') destinés à être introduits et qui, à une première extrémité (6, 6'), peuvent pénétrer dans chacun des tronçons de conduit en coopérant de manière étanche.

8. Raccord amovible selon l'une quelconque des revendications précédentes, caractérisé en ce que chaque extrémité de l'anneau en forme de bande a une saillie externe (1c, 1d) afin que le mouvement de l'anneau en forme de bande puisse être obtenu par serrage des saillies.

**Patentansprüche**

1. Lösbare Verbindung zwischen zwei Kanalabschnitten (7, 7') in einem Luftverteilungskanal eines Luftverteilungssystems, umfassend zwei Verbindungshülsen (5, 5'), die am einen Ende zumindest einen radialen Flansch (8, 8') haben und mittels eines Dichtungselements in Form eines gespaltenen Bandrings (1) und einer Luftabdichtschicht (2) lösbar miteinander verbunden sind, wobei die Dicke der Luftabdichtschicht in Radialrichtung grösser ist als die Ausdehnung des Flansches (8, 8') in Radialrichtung, und die Enden des Bandrings in Richtung voneinander weg bewegbar sind, so dass der Bandring die genannten einen Enden der beiden Verbindungshülsen überspannen kann, sowie in Richtung aufeinander zu bewegbar sind, so dass die Flansche in die Luftabdichtschicht eindringen, und wobei die Enden des Bandrings Verschlussglieder (3, 4) aufweisen, um die Enden des Bandrings in einer zusammengeführten Position festzuhalten, dadurch **gekennzeichnet,** dass die Luftabdichtschicht (2) ein auf der Innenseite des gespaltenen Bandrings festgeleimter Spaltring ist, dass der Bandring eine im wesentlichen ebene Umfangswand hat, dass die beiden Verbindungshülsen (5, 5') am anderen Ende (6, 6') mit je einem der Kanalabschnitte (7, 7') dichtend verbindbar sind, und dass der Bandring (1) Glieder (9) hat, um den Bandring an einer Wand (12) aufzuhängen und somit den Luftkanal an der Wand zu halten.

2. Lösbare Verbindung nach Anspruch 1, dadurch **gekennzeichnet,** dass der Bandring aus einem elastisch verformbaren Material hergestellt ist, das die genannte Bewegung der Enden des Bandrings ermöglicht.

3. Lösbare Verbindung nach Anspruch 1, dadurch **gekennzeichnet,** dass der Bandring ein Gelenk (13) aufweist, das die genannte Bewegung der Enden des Bandrings ermöglicht.

4. Lösbare Verbindung nach einem der vorhergehenden Ansprüche, dadurch **gekennzeichnet,** dass die Luftabdichtschicht (2) in vorbestimmtem Abstand vom einen Ende (1a) des Bandrings endet, so dass das andere Ende (1b) des Bandrings um diese vorbestimmte Strecke unter das genannte eine Ende eingeführt werden kann, derart, dass sich die beiden Enden des Bandrings überlappen.

5. Lösbare Verbindung nach Anspruch 4, dadurch **gekennzeichnet,** dass die Verschlussglieder in einem Bereich der Bandringenden angeordnet sind, wo sich diese überlappen, wobei die Verschlussglieder am genannten anderen Ende (1b) aus Haken (3) bestehen, welche in entsprechende Löcher (4) im genannten einen Ende des Bandrings einsteckbar sind.

6. Lösbare Verbindung nach einem der Ansprüche 4-5, dadurch **gekennzeichnet,** dass das genannte eine Ende (1a) des Bandrings eine Führungsfläche (1c) aufweist, mit deren Hilfe das andere Ende (1b) unter das genannte eine Ende einführbar ist.

7. Lösbare Verbindung nach einem der vorhergehenden Ansprüche, dadurch **gekennzeichnet,** dass die Verbindungshülsen aus Verbindungsnippeln (5, 5') bestehen, die am einen Ende (6, 6') in je einen der Kanalabschnitte dichtend einführbar sind.

8. Lösbarung Verbindung nach einem der vorhergehenden Ansprüche, dadurch **gekennzeichnet,** dass jedes Ende des Bandrings einen auswendigen Vorsprung (1c, 1d) aufweist, so dass die genannte Bewegung des Bandrings durch Erfassen der Vorsprünge erfolgen kann.

FIG. 1

FIG. 2

FIG. 3

FIG. 4

FIG. 5